# EUROPÄISCHE PATENTSCHRIFT

(11) **EP 1 628 046 B1**
(45) Veröffentlichungstag und Bekanntmachung des Hinweises auf die Patenterteilung: **26.11.2008**
(21) Anmeldenummer: 05016751.9
(22) Anmeldetag: 02.08.2005
(51) Int. Cl.: F16H 61/22, F16H 59/04

(54) **Schaltvorrichtung für ein Kraftfahrzeuggetriebe**
Shifting device for a vehicle transmission
Dispositif de changement de vitesses pour une boîte de vitesses de véhicule

(30) Priorität: 16.08.2004 DE 102004039780
(43) Veröffentlichungstag der Anmeldung: 22.02.2006
(73) Patentinhaber: ZF Friedrichshafen AG, 88038 Friedrichshafen (DE)
(72) Erfinder: Giefer, Andreas, 49448 Lemförde (DE); Meyer, Jörg, 49419 Wagenfeld (DE)

(56) Entgegenhaltungen:
- EP-A1- 0 983 893
- EP-A2- 0 985 854
- DE-A1- 2 700 976
- DE-C1- 3 807 508
- FR-A- 2 646 820
- FR-A1- 2 775 748
- US-A- 1 397 420

## Beschreibung

Die Erfindung betrifft eine Schaltvorrichtung für ein Kraftfahrzeuggetriebe mit den im Oberbegriff des Anspruches 1 genannten Merkmalen.

Bei derartigen Schaltvorrichtungen, bei denen die Bewegung des Schalthebels mittels eines Schaltgestänges oder Seilzügen als Übertragungsgliedern auf das zu schaltende Kraftfahrzeuggetriebe übertragen werden, sind im Stand der Technik allgemein bekannt. Die verwendeten Übertragungsglieder werden üblicherweise nach der unabhängig von einander erfolgenden Montage der Schaltvorrichtung und des Kraftfahrzeuggetriebes abschließend zwischen die beiden Baugruppen eingefügt. Um eine einwandfreie Schaltbarkeit des Getriebes zu erreichen, müssen die Übertragungsglieder eine bestimmte Konfiguration aufweisen, wobei die unterschiedlichen Gangstufen des Kraftfahrzeuggetriebes den verschiedenen Stellungen des Schalthebels der Schaltvorrichtung angepasst und in Übereinstimmung gebracht werden müssen. Zu diesem Zweck werden sowohl die internen Getriebeschaltungsteile des Kraftfahrzeuggetriebes als auch der Schalthebel der Schaltvorrichtung in einer korrespondierenden Einstellstellung fixiert, bevor die Übertragungsglieder zwischen die Baugruppen eingefügt werden.

Darüber hinaus ist es auch für den Transport der Schaltvorrichtungen vorteilhaft, den Schalthebel zu fixieren, um Beschädigungen der Schaltvorrichtung oder der Verpackung durch Eigenbewegungen des Schalthebels zu vermeiden.

Zur Fixierung des Schalthebels der Schaltvorrichtung sind im Stand der Technik verschiedene Lösungsvarianten bekannt geworden, bei denen zum Beispiel am Schalthebel ein Feststellarm angebracht ist, welcher eine Fixierungsbohrung aufweist, die in einer Stellung des Schalthebels mit einer Fixierbohrung des Schalthebelgehäuses fluchtet, wie dies in der DE 38 07 508 C1 offenbart ist.

Darüber hinaus sind beispielsweise Feststellvorrichtungen zur Fixierung des Schalthebels bekannt, bei denen eine Halteklammer in eine gehäuseseitige Fixierbohrung und eine gleichzeitig vorhandene Fixierbohrung an der für die Verschwenkung des Schalthebels notwendigen Gelenkkugel eingesteckt wird, wobei sich die in den Bauteilen vorhandenen Fixierbohrungen in der Fixierstellung des Schalthebels in einer Fluchtungsposition befinden. Ein Nachteil der zuletzt angesprochenen Lösung besteht darin, dass die Halteklammer als gesondertes Bauteil entweder für Montagezwecke separat zur Verfügung stehen muss oder am Gehäuse der Schaltvorrichtung in einer separaten Halterung aufgenommen sein muss.

Ferner zeigt die FR 2 646 820, die als nächstliegender Stand der Technik betrachtet wird, bereits eine Schaltvorrichtung für ein Kraftfahrzeuggetriebe mit einem Gehäuse, einem im Gehäuse schwenkbar gelagerten Wählhebel, welcher durch Übertragungsglieder mit dem Kraftfahrzeuggetriebe zur Wahl unterschiedlicher Gangstufen verbunden ist und einer Feststellvorrichtung zur Fixierung des Schalthebels in einer Position, wobei die Feststellvorrichtung zwei am Gehäuse benachbart des Austrittspunktes des Schalthebels aus dem Gehäuse angeordnete, um einen gehäusefesten Drehpunkt in eine Verriegelungsstellung und eine Freigabestellung verschwenkbare, den Schalthebel in der Verriegelungsstellung von zwei Seiten umgreifende Rastzungen aufweist. Die Verdrehbewegung wird durch ein zusätzliches in einer gehäusefesten Kulisse geführtes Verschiebeelement bewirkt, welches über formschlüssige Elemente mit den Rastzungen zusammenwirkt. In der Verriegelungsstellung wird das Verschiebeelement mittels eins Steckschlosses fixiert. Diese Vorrichtung ist in nachteiliger Weise insgesamt aufwendig gestaltet und mit einer Vielzahl von Bauteilen ausgestattet.

Eine ähnliche Ausbildung ist in der US 1,397,420 gezeigt, wobei hier die Rastzungen in der Verriegelungsstellung ebenfalls durch eine Schloss fixiert werden. Das Schloss ist hierzu an einer der Rastzungen angeordnet und greift mit einem Verriegelungselement in die zweite Rastzunge ein, um auf diese Weise die beiden Rastzungen miteinander in der Verriegelungsstellung zu verbinden und zu fixieren. Dies erforderte eine aufwendige Gestaltung der beiden Rastzungen.

Darüber hinaus zeigt die DE 27 00 976 A1 eine Schaltvorrichtung für ein Kraftfahrzeuggetriebe mit einem Gehäuse, einem im Gehäuse schwenkbar gelagerten Wählhebel, welcher durch Übertragungsglieder mit dem Kraftfahrzeuggetriebe zur Wahl unterschiedlicher Gangstufen verbunden ist, und einer Feststellvorrichtung zur Fixierung des Schalthebels in einer Position, wobei die Feststellvorrichtung zwei am Gehäuse benachbart des Austrittspunktes des Schalthebels aus dem Gehäuse angeordnete, um jeweils einen gehäusefesten Drehpunkt in eine Verriegelungsstellung und eine Freigabestellung verschwenkbare, den Schalthebel in der Verriegelungsstellung von zwei Seiten umgreifende Rastzungen aufweist. Die Verriegelungsstellung wird durch das Drehen einer zusätzlichen Hutmanschette erzielt, wobei die Verriegelungsstellung in nachteiliger Weise durch das Einsetzen eines separaten und zusätzlichen Steckschlosses gesichert wird.

Ausgehend von dem beschriebenen Stand der Technik liegt die Aufgabe der Erfindung darin, eine Schaltvorrichtung für ein Kraftfahrzeuggetriebe so weiter zu entwickeln, dass die zugehörige Feststellvorrichtung zur Fixierung des Schalthebels mit einfachen Mitteln herstellbar ist, jederzeit an der Schaltvorrichtung verfügbar ist und ohne zusätzliche Hilfsmittel wie Werkzeuge sowohl in die Verriegelungsstellung als auch in die Freigabestellung für den Schalthebel bringbar ist.

Diese Aufgabe wird für eine gattungsgemäße Schaltvorrichtung durch die im kennzeichnenden Teil des Anspruches 1 beschriebene technische Lehre gelöst.

Die zugehörige Feststellvorrichtung weist mindestens zwei am Gehäuse benachbart des Austrittspunktes des Schalthebels aus dem Gehäuse angeordnete, um mindestens einen gehäusefesten Drehpunkt in eine Verriegelungsstellung und eine Freigabestellung verschwenkbare, den Schalthebel in der Verriegelungsstellung von zwei Seiten umgreifende Rastzungen auf. Die um einen gehäusefesten Drehpunkt schwenkbaren Rastzungen gewährleisten zum einen, dass die Feststellvorrichtung durch seine unverlierbar am Gehäuse festgelegten Bauelemente jederzeit sowohl bei der Erstmontage der Schaltvorrichtung als auch bei späteren Reparaturmaßnahmen jederzeit zur Verfügung steht. Darüber hinaus ist die Verschwenkung der Rastzungen in die Verriegelungsstellung und aus dieser heraus für das Montage- oder Servicepersonal problemlos ohne Werkzeug durchführbar. Bei der erfindungsgemäßen Schaltvorrichtung für ein Kraftfahrzeuggetriebe hintergreifen die Rastzungen in ihrer Verriegelungsstellung zur Festlegung der Schalthebelposition je eine am Gehäuse angeordnete Haltenase. Diese Ausgestaltung stellt sicher, dass nicht unbeabsichtigt die Verriegelungsstellung für den Schalthebel aufgehoben werden kann.

Besondere Ausgestaltungen des Gegenstandes der Erfindung ergeben sich zusätzlich durch die in den Unteransprüchen offenbarten Merkmale.
Dies ist insbesondere auch dann von Vorteil, wenn die Schaltvorrichtung auch während des Transportes in einer festgelegten Position für den Schalthebel verriegelt werden soll, um eine Beschädigung der Schaltvorrichtung oder der Verpackung durch Eigenbewegungen des Schalthebels zu vermeiden.

Es hat sich darüber hinaus als vorteilhaft erwiesen, die Rastzungen in einer im Wesentlichen senkrecht zur Schalthebellängsachse angeordneten Bewegungsebene parallel zur Gehäuseoberseite verschwenkbar zu gestalten. Durch diese Maßnahme ist es möglich, die Rastzungen unmittelbar auf der Gehäuseoberseite anzubringen, was insbesondere unter Platzspargründen vorteilhaft ist. Die Rastzungen können als Kunststoffformteile ausgebildet sein, wodurch eine kostengünstige Herstellung gewährleistet ist.

Darüber hinaus besteht eine vorteilhafte Weiterbildung des Gegenstandes der Erfindung darin, die Rastzungen durch mindestens eine Haltefeder in ihrer Freigabestellung zu halten. Die Haltefeder kann dabei als Schraubenfeder ausgebildet sein, welche am gehäusefesten Drehpunkt gelagert ist und zwei Federschenkel aufweist, die mit je einer Rastzunge in Wirkverbindung stehen. Durch diese bauliche Gestaltung werden die Rastzungen zum einen in ihrer Freigabestellung fixiert, darüber hinaus vermeidet die durch die Haltefeder auf die Rastzungen wirkende Andruckkraft das Entstehen von unerwünschten Schwingungsgeräuschen der Rastzungen in ihrer Freigabestellung. Zur Fixierung des Schalthebels werden die Rastzungen entgegen der Federkraft verschoben, bis sie die Verriegelungsstellung erreicht haben und in dieser Position die oben erwähnten Haltenasen hintergreifen.

Entsprechend einer vorteilhaften Weiterbildung können die Rastzungen darüber hinaus jeweils eine Ausnehmung aufweisen, deren gemeinsame Größenausdehnung dem Querschnitt des umgriffenen Schalthebels entspricht. Sofern der Schalthebel einen runden Querschnitt aufweist, ergeben sich für die Ausnehmungen der Rastzungen somit vorteilhafterweise halbkreisförmige Grundrissgestaltungen. Die Anpassung an den Querschnitt des Schalthebels unterstützt die Genauigkeit der Verriegelungsposition des Schalthebels.

Im Folgenden wird ein Ausführungsbeispiel des Gegenstandes der Erfindung anhand der beigefügten beiden Zeichnungen näher erläutert.

Es zeigen:
- Figur 1: eine perspektivische Draufsicht auf eine erfindungsgemäße Schaltvorrichtung in der Freigabestellung des Schalthebels und
- Figur 2: die perspektivische Ansicht der Schaltvorrichtung aus Figur 1 in der Verriegelungsstellung für den Schalthebel.

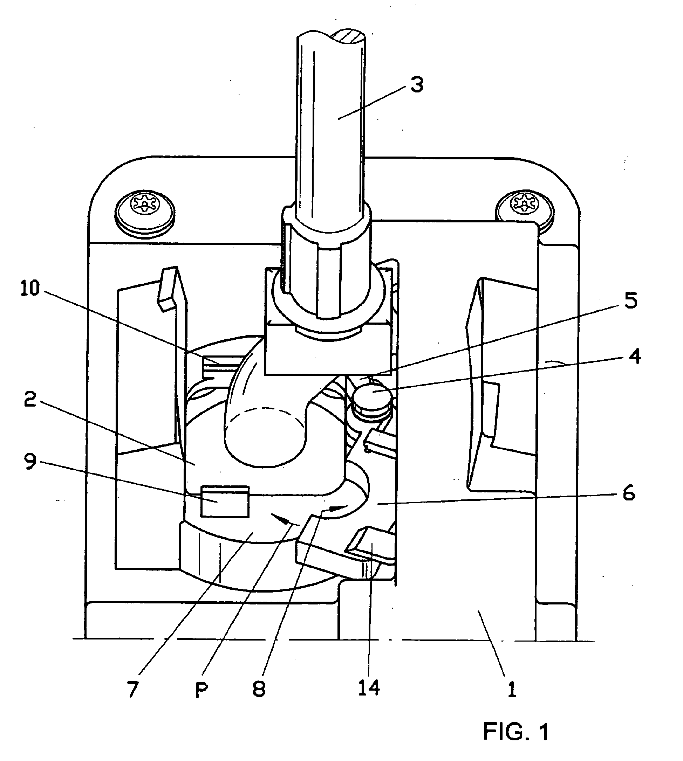

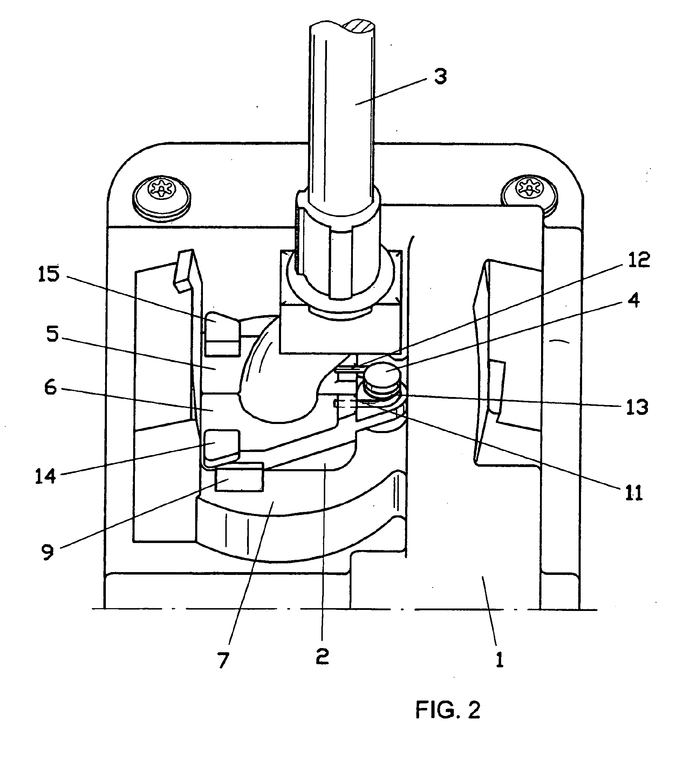

Die in den Figuren 1 und 2 dargestellte Schaltvorrichtung weist ein Gehäuse 1 auf, welches an seiner Oberseite mit einer Durchbrechung 2 versehen ist, durch welche ein verschwenkbarer Schalthebel 3 nach oben aus dem Gehäuse 1 herausragt. Seitlich benachbart des Schalthebels 3 befindet sich ein Drehpunkt 4, an dem zwei Rastzungen 5, 6 verschwenkbar festgelegt sind. Die Rastzungen 5, 6 sind im Wesentlichen plattenförmig ausgebildet und parallel zur Gehäuse Oberseite in einer senkrecht zur Schalthebellängsachse angeordneten Bewegungsebene beweglich. Die Unterseite der Rastzungen 5, 6 liegt dabei auf einer Plateaufläche 7 des Gehäuses 1 auf.

Die Figur 1 stellt die Position der Rastzungen 5 und 6 in der Freigabestellung des Schalthebels 3 dar. In dieser Freigabestellung ist der Schalthebel 3 innerhalb der Durchbrechung 2 des Gehäuses 1 entsprechend der vorgestimmten Schaltungsebenen der Schaltvorrichtung zur Wahl unterschiedlicher Gangstufen eines durch hier nicht näher dargestellte Übertragungsglieder verbundenen Kraftfahrzeuggetriebes bewegbar.

Soll im Rahmen des Transportes der Schaltvorrichtung oder bei einer anschließenden Montage oder Wartung die Position des Schalthebels 3 fixiert werden, so dass sich eine Verriegelungsstellung des Schalthebels 3 ergibt, so werden die Rastzungen 5 und 6 entsprechend des Pfeiles P in Figur 1 in Richtung des Schalthebels 3 verschwenkt. Jeweils eine in jeder Rastzunge 5, 6 vorhandene Ausnehmung 8 mit halbkreisförmiger Grundrissgestalt kommt am Ende des Verschwenkweges der Rastzungen 5 und 6 am Schalthebel 3 zur Anlage und umschließt den Schalthebel halbringförmig.

Diese Verriegelungsposition ist im Einzelnen der Darstellung der Figur 2 zu entnehmen. Um ein Zurückschwenken der Rastzungen 5 und 6 in die Freigabestellung für den Schalthebel zu verhindern, befinden sich auf der Plateaufläche 7 für jede Rastzunge 5, 6 jeweils eine Haltenase 9, 10, die von der jeweiligen Rastzunge 5 bzw. 6 in ihrer Verriegelungsstellung hintergriffen wird.

In der Figur 2 ist darüber hinaus zu sehen, dass sich an der der Plateaufläche 7 abgewandten Oberseite der Rastzungen 5 und 6 im Bereich des Drehpunktes 4 jeweils ein Federschenkel 11 bzw. 12 befindet, die zu einer Haltefeder 13 gehören, die als Schraubenfeder ausgebildet ist und den als Rundbolzen gestalteten Drehpunkt 4 umgreift. Die beschriebene konstruktive Gestaltung führt zu einer Andruckkraft der Rastzungen 5 und 6 in Richtung der Plateaufläche 7, so dass zum einen eine Schwingungsgeräuschentwicklung der Rastzungen 5 und 6 in ihrer Freigabestellung vermieden wird, eine zuverlässige Positionierung der Rastzungen 5 und 6 hinter den Haltenasen 9 und 10 in der Verriegelungsstellung für den Schalthebel 3 gewährleistet ist und darüber hinaus die Rastzungen nach Freigabe durch die Rastnasen selbsttätig in die Freigabeposition verschwenken. Um die Verschwenkbewegung der Rastzungen 5 und 6 in die Verriegelungsposition zu erleichtern, sind die Haltenasen 9 und 10 mit einer ausgehend von dem Plateauflächenniveau ansteigenden, rampenartig ausgebildeten Oberseite versehen, über die die Rastzungen 5 und 6 problemlos in die Verriegelungsstellung bewegt werden können.

Den Figuren 1 und 2 ist darüber hinaus zu entnehmen, dass die Rastzungen 5, 6 an ihrer dem Gehäuse abgewandten Oberseite jeweils einen Griffhebel 14, 15 aufweisen, der eine problemlose Handhabung der Rastzungen 5 und 6 ohne Werkzeuge wie Zangen und dergleichen ermöglicht.

Selbstverständlich ist für die Ausgestaltung der Rastzungen 5 und 6 auch eine andere Formgebung als die in den Figuren 1 und 2 dargestellte Ausgestaltungsvariante denkbar. Erfindungswesentlich ist, dass die Feststellvorrichtung zur Lagerfixierung des Schalthebels 3 durch zwei um einen Drehpunkt 4 schwenkbare Rastzungen 5, 6 gebildet ist, die in der Verriegelungsstellung für den Schalthebel 3 diesen von zwei Seiten umgreifen.

### Bezugszeichenliste

- 1: Gehäuse
- 2: Durchbrechung
- 3: Schalthebel
- 4: Drehpunkt
- 5: Rastzunge
- 6: Rastzunge
- 7: Plateaufläche
- 8: Ausnehmung
- 9: Haltenase
- 10: Haltenase
- 11: Federschenkel
- 12: Federschenkel
- 13: Haltefeder
- 14: Griffhebel
- 15: Griffhebel

## Patentansprüche

1. Schaltvorrichtung für ein Kraftfahrzeuggetriebe mit einem Gehäuse, einem im Gehäuse (1) schwenkbar gelagerten Schalthebel (3), welcher durch Übertragungsglieder mit dem Kraftfahrzeuggetriebe zur Wahl unterschiedlicher Gangstufen verbindbar ist, und einer Feststellvorrichtung zur Fixierung des Schalthebels (3) in einer Position, vorzugsweise der Neutralposition des Kraftfahrzeuggetriebes, wobei die Feststellvorrichtung mindestens zwei am Gehäuse (1) benachbart des Austrittspunktes des Schalthebels (3) aus dem Gehäuse (1) angeordnete, um mindestens einen gehäusefesten Drehpunkt (4) in eine Verriegelungsstellung und eine Freigabestellung verschwenkbare, den Schalthebel (3) in der Verriegelungsstellung von zwei Seiten umgreifende Rastzungen (5, 6), aufweist,
**dadurch gekennzeichnet, dass**
die Rastzungen (5, 6) in ihrer Verriegelungsstellung zur Festlegung der Schalthebelposition je eine am Gehäuse (1) angeordnete Haltenase (9, 10) hintergreifen.

2. Schaltvorrichtung nach Anspruch 1, **dadurch gekennzeichnet, dass** die Rastzungen (5, 6) in einer im Wesentlichen senkrecht zur Schalthebellängsachse angeordneten Bewegungsebene parallel zur Oberseite des Gehäuses (1) verschwenkbar sind.

3. Schaltvorrichtung nach Anspruch 1, **dadurch gekennzeichnet, dass** die Rastzungen (5, 6) durch mindestens eine Haltefeder (13) in ihrer Freigabestellung festgelegt sind.

4. Schaltvorrichtung Anspruch 3, **dadurch gekennzeichnet, dass** die Haltefeder (13) als Schenkelfeder ausgebildet ist, welche im gehäusefesten Drehpunkt (4) gelagert ist und zwei Federschenkel (11, 12) aufweist, die mit je einer Rastzunge (5, 6) in Wirkverbindung stehen.

5. Schaltvorrichtung nach einem der Ansprüche 1 bis 4, **dadurch gekennzeichnet, dass** die Rastzungen (5, 6) jeweils eine Ausnehmung (8) aufweisen, deren gemeinsame Größenausdehnung dem Querschnitt des umgriffenen Schalthebels (3) entspricht.

6. Schaltvorrichtung nach Anspruch 5, **dadurch gekennzeichnet, dass** die Ausnehmungen (8) der Rastzungen (5, 6) jeweils eine halbkreisförmige Grundrissgestalt aufweisen.

7. Schaltvorrichtung nach einem der Ansprüche 1 bis 6, **dadurch gekennzeichnet, dass** die Rastzungen (5, 6) an ihrer dem Gehäuse (1) abgewandten Oberseite einen Griffhebel (14, 15) zur Verschwenkung der Rastzungen (5, 6) aufweisen.

8. Schaltvorrichtung nach einem der Ansprüche 1 bis 7, **dadurch gekennzeichnet, dass** die Rastzungen (5, 6) als Kunststoffformteile ausgebildet sind.

## Claims

1. Gear change device for a motor vehicle gearbox having a housing, a gear change lever (3) which is pivotably mounted in the housing (1) and can be connected by transmission elements to the motor vehicle gearbox for selecting different gear steps, and a fixing device for fixing the gear change lever (3) in a position, preferably the neutral position of the motor vehicle gearbox, the fixing device having at least two latching tongues (5, 6) which are arranged on the housing (1) adjacently to the point at which the gear change lever (3) emerges from the housing (1), are pivotable about at least one pivot point (4), fixed to the housing, into a locking position and a releasing position, and embrace the gear change lever (3) from two sides in the locking position,
**characterised in that**
the latching tongues (5, 6), in their locking position for fixing the gear change lever position, each engage behind a retaining lug (9, 10) arranged on the housing (1) .

2. Gear change device according to Claim 1, **characterised in that** the latching tongues (5, 6) are pivotable parallel to the top side of the housing (1) in a movement plane arranged substantially perpendicularly to the longitudinal axis of the gear change lever.

3. Gear change device according to Claim 1, **characterised in that** the latching tongues (5, 6) are fixed in their releasing position by at least one retaining spring (13).

4. Gear change device according to Claim 3, **characterised in that** the retaining spring (13) is designed as a leg spring which is mounted in the pivot point (4) fixed to the housing and has two spring legs (11, 12) which are operatively connected to one latching tongue (5, 6) each.

5. Gear change device according to one of Claims 1 to 4, **characterised in that** the latching tongues (5, 6) each have a recess (8), the combined dimensional extent of which corresponds to the cross-section of the embraced gear change lever (3).

6. Gear change device according to Claim 5, **characterised in that** the recesses (8) of the latching tongues (5, 6) each have a semicircular shape in plan view.

7. Gear change device according to one of Claims 1 to 6, **characterised in that** the latching tongues (5, 6) have, at their top side facing away from the housing (1), a gripping lever (14, 15) for pivoting the latching tongues (5, 6).

8. Gear change device according to one of Claims 1 to 7, **characterised in that** the latching tongues (5, 6) are formed as plastics moulded parts.

## Revendications

1. Dispositif de changement de vitesse pour une boîte de vitesses de véhicule automobile avec un boîtier, un levier de changement, de vitesse (3) monté pivotant dans le boîtier (1), lequel peut être relié par des organes de transmission à la boîte de vitesses du véhicule automobile pour la sélection de différents rapports de vitesse, et avec un dispositif de blocage pour fixer le levier de changement de vitesse (3) dans une position, de préférence à position neutre de la boîte de vitesses du véhicule automobile, le dispositif de blocage comportant au moins deux languettes d'encliquetage (5, 6) disposées sur le boîtier (1), au voisinage du point de sortie du levier de changement de vitesse (3) du boîtier (1), pouvant pivoter autour d'au moins un point de rotation (4) solidaire du boîtier dans une position de verrouillage et une position de déverrouillage, et qui entourent depuis deux côtés le levier de changement de vitesse (3) dans la position de verrouillage,
**caractérisé en ce que**
dans leur position de verrouillage les languettes d'encliquetage (5,6) passent, chacune derrière un ergot de retenue (9, 10), disposé sur le boîtier (1), pour fixer la position du levier de changement de vitesse.

2. Dispositif de changement de vitesse selon la revendication 1, **caractérisé en ce que** les languettes d'encliquetage (5, 6) peuvent pivoter dans un plan de déplacement, dispose sensiblement perpendiculairement à l'axe longitudinal du levier de changement de vitesse, parallèlement à la face supérieure du boîtier (1).

3. Dispositif de changement de vitesse selon la revendication 1, **caractérisé en ce que** les languettes d'encliquetage (5, 6) sont fixées dans leur position de déverrouillage par au moins un ressort de retenue (13).

4. Dispositif de changement de vitesse selon la revendication 3, **caractérisé en ce que** le e ressort de retenue (13) est réalisé sous la forme d'un ressort à branches qui est monté dans le point de rotation (4) solidaire du boîtier et comporte deux branches de ressort (11, 12) qui sont en liaison active avec chacune une languette d'encliquetage (5, 6).

5. Dispositif de changement de vitesse selon l'une quelconque des revendications 1 à 4, **caractérisé en ce que** les languettes d'encliquetage (5, 6) présentent chacune un évidement (8) dont la dimension commune correspond à la section transversale du levier de changement de vitesse (3) qu'elles entourent.

6. Dispositif de changement de vitesse selon la revendication 5, **caractérise en ce que** les évidements (8) des larguettes d'encliquetage (5, 6) présentent chacun un tracé en forme de demi-cercle en projection horizontale.

7. Dispositif de changement de vitesse selon l'une quelconque des revendications 1 à 6, **caractérisé en ce que** les languettes d'encliquetage (5, 6) présentent sur leur face supérieure, tournée à l'opposé du boîtier (1), un levier de préhension (14, 15) pour le pivotement des languettes d'encliquetage (5, 6).

8. Dispositif de changement de vitesse selon l'une quelconque des revendications 1 à 7, **caractérisé en ce que** les languettes d'encliquetage (5, 6) sont réalisées sous la forme de pièces façonnées en matière plastique.
